# EUROPEAN PATENT SPECIFICATION

(11) **EP 3 114 166 B1**
(45) Date of publication and mention of the grant of the patent: **22.05.2019**
(21) Application number: 15718581.0
(22) Date of filing: 05.03.2015
(51) Int. Cl.: C08K 7/22, C08K 9/04, C08L 7/00

(54) **RUBBER COMPOUND WITH A HIGH IMPERMEABILITY TO OXYGEN FOR TYRE PORTIONS**
KAUTSCHUKVERBINDUNG MIT HOHER IMPERMEABILITÄT GEGENÜBER SAUERSTOFF FÜR REIFENTEILE
COMPOSE DE CAOUTCHOUC A IMPERMEABILITE ELEVEE A L'OXYGENE POUR DES PARTIES DE PNEUMATIQUE

(30) Priority: 05.03.2014 IT RM20140104
(43) Date of publication of application: 11.01.2017
(73) Proprietor: Bridgestone Corporation, Tokyo 104-8340 (JP)
(72) Inventor: SILICANI, Josè Antonio, I-00128 Roma (IT); GRENCI, Valeria, I-00124 Roma (IT)
(74) Representative: Marchetti, Alessio
(86) International application number: PCT/IB2015/051620
(87) International publication number: WO 2015/132754

(56) References cited:
- WO-A1-2007/070063
- A. Das, K. W. Stöckelhuber, S. Rooj, D. Y. Wang, G. Heinrich: "Synergistic Effects of ExpandedNanoclay and Carbon Black onNatural Rubber Compounds", , 2 August 2010 (2010-08-02), XP002725750, Retrieved from the Internet: URL:http://www.researchgate.net/publicatio n/232660433_Synergistic_Effects_of_Expande d_Nanoclay_and_Carbon_Black_on_Natural_Rub ber_Compounds/file/9fcfd5089816ce0a36.pdf [retrieved on 2014-06-13]
- Mohamad Irfan Fathurrohman ET AL: "The Effect of Stearic Acid on Expanded Organoclay and Rheometric Properties of Natural Rubber/Expanded Organoclay Nanocomposites", Journal of Materials Science and Engineering. B, 25 September 2013 (2013-09-25), pages 575-581, XP055123176, El Monte Retrieved from the Internet: URL:http://search.proquest.com/docview/151 8644035 [retrieved on 2014-06-13]

## Description

### TECHNICAL FIELD

The present invention relates to rubber compounds with a high impermeability to oxygen for tyre portions.

### BACKGROUND ART

In the manufacture of tyres it is necessary to produce some portions characterised by a high impermeability to oxygen.

One of these portions is the inner liner, which consists of an internal layer of rubber used in tubeless tyres, i.e. those without an inner tube, in order to ensure that the air contained in the carcass remains pressurized. The inner liner must also ensure that the oxygen remains confined as much as possible within the carcass and is not diffused to the other portions of the tyre causing phenomena of degradation thereof.

In order to obtain a tyre with increasingly high rolling resistance, there is the need to produce an inner liner with increasingly reduced thickness, without this impairing its performance in terms of impermeability. In fact, a thinner inner liner necessarily translates into a smaller quantity of material used and, therefore, a lower weight of the tyre itself, with positive effects on the global energy consumption of the vehicle and on the rolling resistance. From the above, it is understood that a reduction in the thickness of the inner liner is only possible if a high impermeability can be imparted thereto.

The portions with a high impermeability to oxygen are usually made with a halobutyl rubber, but to satisfy the physical characteristics required for a tyre compound, it might be advantageous to use another rubber, such as natural rubber, together with the halobutyl rubber. However, it has been determined experimentally that the use of a polymer base mixture can cause uneven dispersion of the ingredients of the compound, with consequences in terms of physical properties known to those skilled in the art.

Therefore, there was the need to produce a compound for tyre portions, whose technical characteristics were such as to impart a high impermeability to oxygen and, simultaneously, allow the use of a polymer base mixture without compromising the homogeneous dispersion of the ingredients in the compound.

### DISCLOSURE OF INVENTION

The object of the present invention is a compound to prepare a tyre portion; said compound comprising a polymer base with a cross-linking unsaturated chain comprising at least an halobutyl rubber, a reinforcing filler and a vulcanization system; said compound being characterised in that it comprises a reinforcing filler with a laminated structure pretreated with a treating agent comprised in the group consisting of fatty acids, resin acids, fatty acid salts and fatty acid esters; said reinforcing filler with a laminated structure being pretreated with a quantity of treating agent ranging from 50 to 100 parts by weight per 100 parts by weight of filler with laminated structure.

Here and hereunder, the vulcanization system is intended as a group of ingredients comprising at least sulphur and accelerators that, in the preparation of the compound, are added in a final mixing step, and have the purpose of promoting vulcanization of the polymer base when the compound is subjected to a vulcanization temperature.

Here and hereunder, the reinforcing filler with a laminated structure pretreated with fatty acids is intended as a reinforcing filler with a laminated structure mixed with the fatty acids according to a method so as to produce a chemical/physical interaction between the chains of the fatty acids and the reinforcing filler. A possible method concerns cold mixing of the reinforcing filler with the fatty acids and subsequent heating of the mixture formed.

Preferably, the compound comprises from 2 to 70 phr, even more preferably, from 2 to 20 phr, of said pretreated reinforcing filler with a laminated structure.

Preferably, the reinforcing filler with a laminated structure is comprised in the group consisting of argillaceous materials, talc, phyllosilicates, materials belonging to the mica group, graphite, and graphene.

Preferably, the reinforcing filler with a laminated structure is pretreated with a quantity of treating agent ranging from 70 to 100 parts by weight per 100 parts by weight of filler with laminated structure.

Preferably, the reinforcing filler with a laminated structure is pretreated with treating agent comprising a chain of carbon atoms ranging in number from 16 to 24.

Preferably, the polymer base with cross-linking unsaturated chain comprises a polymer mixture consisting at least of the halobutyl rubber and natural rubber.

Preferably, polymer mixture is made up of 60-90 phr of halobutyl rubber and 10-40 phr of natural rubber.

A further object of the present invention is a tyre portion produced with a compound according to the present invention.

Preferably, the tyre portion is an inner liner.

A further object of the present invention is a tyre comprising a portion as defined above.

One more object of the present invention is a use, in rubber compounds for the preparation of tyre portions, of a reinforcing filler with a laminated structure pretreated with a treating agent comprised in the group consisting of fatty acids, resin acids, fatty acid salts and fatty acid esters.

### BEST MODE FOR CARRYING OUT THE INVENTION

For a better understanding of the present invention, some examples, provided purely for non-limiting, illustrative purposes, are indicated below.

### EXAMPLES

Five compounds according to the present invention (A-E) and five control compounds (Cont. 1-Cont. 5) were produced. The five compounds according to the present invention are distinguished from one another based on the composition of the polymer base and on the quantity of fatty acids used for pretreatment of the reinforcing filler with a laminated structure.

The five control compounds are compounds in which the reinforcing filler with a laminated structure pretreated with fatty acids is not present (Cont. 1-Cont. 3) and compounds comprising the reinforcing filler with a laminated structure pretreated with a quantity of fatty acids below the quantity established in the present invention (Cont. 4 and Cont. 5).

The process for preparation of the compounds described in the examples is indicated below. This process is not a limitation for the present invention.
- pretreating the reinforcing filler with a laminated structure with fatty acids
- Clay was mixed with a quantity of stearic acid according to the proportions indicated in the compositions of Tables I and II.

The mixture obtained was maintained at a temperature of 100°C for one hour, after which it was left to cool and ground to be used in a compound.

### - Preparation of the compounds -

### (1^{st} mixing step)

The ingredients indicated in Tables I and II, with the exclusion of the vulcanization system, were loaded into a mixer with tangential rotors with an inner volume of from 230 to 270 litres before starting to mix, reaching a filling factor of 66-72%.

The mixer was operated at a speed of 40-60 rpm, and the mixture formed was unloaded after reaching a temperature of 140-160°C.

### (2^{nd} mixing step)

The mixture thus produced was once again processed in the mixer operated at a speed of 40-60 rpm. Subsequently, the compound was unloaded after reaching a temperature of 130-150°C.

### (Final mixing step)

The vulcanization system was added to the mixture obtained in the previous mixing step, reaching a filling factor of 63-67%. The mixer was operated at a speed of 20-40 rpm, and the mixture formed was unloaded after reaching a temperature of 100-110°C.

Table I indicates the compositions in phr of the compounds according to the invention.

**TABLE I**

| | A | B | C | D | E |
|---|---|---|---|---|---|
| Natural rubber | -- | 10 | 20 | 20 | 20 |
| Br-IIR | 100 | 90 | 80 | 80 | 80 |
| Clay pretreated with | 20 | 20 | 20 | 20 | 20 |
| stearic acid* | | | | | |
| Carbon black | 7 | | | | |
| ZnO | 3 | | | | |
| Sulphur | 0.5 | | | | |
| Accelerator | 1 | | | | |

| | | | | | |
|---|---|---|---|---|---|
| (*) for compounds A-C the clay was pretreated with 80 parts by weight of stearic acid per 100 parts by weight of clay; for the compounds D and E the clay was pretreated respectively with 100 and 50 parts by weight of stearic acid per 100 parts by weight of clay. Br-IIR stands for brominated butyl rubber | | | | | |

The Carbon Black used is classified with the code N660.

The accelerator used was mercaptobenzothiazole disulphide (MBTS) .

Table II indicates the compositions in phr of the control compounds.

**TABLE II**

| | Cont.1 | Cont.2 | Cont.3 | Cont.4 | Cont.5 |
|---|---|---|---|---|---|
| Natural rubber | -- | 10 | 20 | 20 | 20 |
| Br-IIR | 100 | 90 | 80 | 80 | 80 |
| Clay pretreated with stearic acid** | -- | -- | -- | 20 | 20 |
| Carbon black | 7 | | | | |
| ZnO | 3 | | | | |
| Sulphur | 0.5 | | | | |
| Accelerator | 1 | | | | |

| | | | | | |
|---|---|---|---|---|---|
| (**) for compounds Cont. 4 and Cont. 5, the clay was pretreated respectively with 30 and 10 parts by weight of stearic acid per 100 parts by weight of clay. | | | | | |

The specifications of the ingredients are the same as those indicated for Table I.

The compounds of the examples were subjected to a series of tests to check the physical characteristics and impermeability. The physical characteristics in particular related to resistance to the propagation of cracks, formation of cracks at low temperature and green strength.

The impermeability to oxygen test was performed on materials with a thickness of 0.7 mm and using a conventional apparatus, such as the MOCON® OX-TRA® (model 2/61). The measurements were taken at a temperature of 25 °C.

The test for resistance to crack formation at low temperature was performed in accordance with the standard ISO 4664-1 at a temperature of -40°C.

The test for resistance to crack propagation was performed in accordance with the standard ISO 27727 (using the TEAR ANALYZER) at a temperature of 40°C.

The green strength test was performed in accordance with the standard ASTM D5279 at a temperature of 25°C and a frequency of 50 Hz.

Tables III and IV indicate the results obtained from the tests above. In Tables III and IV the test results are expressed with values indexed to the results of the control compound Cont. 1.

The higher the values relating to impermeability to oxygen, crack propagation and green strength, the better the evaluation of the related characteristic is; vice versa, the lower the values relating to crack formation at low temperature, the better the evaluation of the characteristic is.

**TABLE III**

| | A | B | C | D | E |
|---|---|---|---|---|---|
| Resistance to crack propagation | 105 | 115 | 120 | 120 | 115 |
| Green strength | 105 | 108 | 115 | 115 | 110 |
| Crack formation at low temperature | 96 | 88 | 80 | 80 | 79 |
| Impermeability to oxygen | 120 | 110 | 105 | 105 | 95 |

**TABLE IV**

| | Cont.1 | Cont.2 | Cont.3 | Cont.4 | Cont.5 |
|---|---|---|---|---|---|
| Resistance to crack propagation | 100 | 105 | 110 | 112 | 110 |
| Green strength | 100 | 105 | 109 | 109 | 109 |
| Crack formation at low temperature | 100 | 92 | 84 | 83 | 84 |
| Impermeability to oxygen | 100 | 90 | 80 | 93 | 85 |

As can be seen clearly from comparing the values indicated in Tables III and IV, the solution of the present invention is able to guarantee an improvement in terms of impermeability to oxygen and, simultaneously, an improvement of the physical characteristics, which denotes a homogeneous dispersion of the ingredients in the compound.

By analysing the results relating to the control compounds Cont.4 and Cont.5 it can be seen how the quantity of fatty acids involved in pretreatment of the reinforcing filler with a laminated structure is a mandatory characteristic of the present invention. In fact, the values of Table IV show that if a quantity of fatty acids below the range claimed is used in pretreatment of the reinforcing filler with a laminated structure, the improvements in terms of impermeability to oxygen and physical characteristics are not obtained. Vice versa, if a quantity of fatty acids greater than the quantity claimed is used, the processability of the pretreated reinforcing filler is compromised, without any further improvement of the impermeability to oxygen and of the physical characteristics.

## Claims

1. A compound to prepare a tyre portion; said compound comprising a polymer base with cross-linking unsaturated chain comprising at least one halobutyl rubber, a reinforcing filler, and a vulcanization system; said compound being **characterised in that** it comprises a reinforcing filler with a laminated structure pretreated with a treating agent comprised in the group consisting of fatty acids, resin acid, fatty acid salts and fatty acid esters; said reinforcing filler with a laminated structure being pretreated with a quantity of treating agent ranging from 50 to 100 parts by weight per 100 parts by weight of filler with laminated structure.

2. A compound according to claim 1, **characterised in that** it comprises 2 to 70 phr of said reinforcing filler with a laminated structure pretreated.

3. A compound according to claim 1, **characterised in that** it comprises 2 to 20 phr of said reinforcing filler with a laminated structure pretreated.

4. A compound according to claim 1, **characterised in that** said reinforcing filler with a laminated structure is comprised in the group consisting of argillaceous materials, talc, phyllosilicates, materials belonging to the mica group, graphite, and graphene.

5. A compound according to claim 1, **characterised in that** said reinforcing filler with a laminated structure is pretreated with a quantity of treating agent ranging from 70 to 100 parts by weight per 100 parts by weight of filler with laminated structure.

6. A compound according to claim 1, **characterised in that** said reinforcing filler with a laminated structure is pretreated with treating agent comprising a chain of carbon atoms ranging in number from 16 to 24.

7. A compound according to claim 1, **characterised in that** said polymer base with cross-linking unsaturated chain comprises a polymer mixture consisting at least of said halobutyl rubber and of natural rubber.

8. A compound according to claim 1, **characterised in that** said polymer mixture is made up of 60-90 phr of halobutyl rubber and 10-40 phr of natural rubber.

9. A tyre portion manufactured with a compound according to any of the previous claims.

10. A tyre portion according to claim 9, **characterised in that** it is an inner liner.

11. A tyre comprising a portion according to claim 9.

12. A use of a reinforcing filler with a laminated structure pretreated with a treating agent comprised in the group consisting of fatty acids, resin acid, fatty acid salts and fatty acid esters; said reinforcing filler with a laminated structure being pretreated with a quantity of treating agent ranging from 50 to 100 parts by weight per 100 parts by weight of filler with laminated structure
in rubber compounds for the preparation of tyre portions, said compounds comprising a polymer base with cross-linking unsaturated chain comprising at least one halobutyl rubber and a vulcanization system.

13. A use according to claim 12, **characterised in that** said reinforcing filler with a laminated structure is comprised in the group consisting of argillaceous materials, talc, phyllosilicates, materials belonging to the mica group, graphite, and graphene.

14. A use according to claim 12, **characterised in that** said reinforcing filler with a laminated structure is pretreated with a quantity of treating agent ranging from 70 to 100 parts by weight per 100 parts by weight of filler with laminated structure.

15. A use according to claim 12, **characterised in that** said reinforcing filler with a laminated structure is pretreated with a treating agent comprising a chain of carbon atoms ranging in number from 16 to 24.

## Patentansprüche

1. Mischung zur Herstellung eines Reifenabschnitts; wobei die Mischung eine Polymerbasis mit vernetzender ungesättigter Kette umfasst, die mindestens einen Halogenbutylkautschuk, einen verstärkenden Füllstoff und ein Vulkanisierungssystem umfasst; wobei die Mischung **dadurch gekennzeichnet ist, dass** sie einen verstärkenden Füllstoff mit einer laminierten Struktur umfasst, die mit einem Behandlungsmittel vorbehandelt ist, das in der Gruppe bestehend aus Fettsäuren, Harzsäure, Fettsäuresalzen und Fettsäureestern enthalten ist; wobei der verstärkende Füllstoff mit einer laminierten Struktur mit einer Menge eines Behandlungsmittels im Bereich von 50 bis 100 Gewichtsteilen pro 100 Gewichtsteile Füllstoff mit laminierter Struktur vorbehandelt ist.

2. Mischung nach Anspruch 1, **dadurch gekennzeichnet, dass** sie 2 bis 70 phr des verstärkenden Füllstoffs mit einer vorbehandelten laminierten Struktur umfasst.

3. Mischung nach Anspruch 1, **dadurch gekennzeichnet, dass** sie 2 bis 20 phr des verstärkenden Füllstoffs mit einer vorbehandelten laminierten Struktur umfasst.

4. Mischung nach Anspruch 1, **dadurch gekennzeichnet, dass** der verstärkende Füllstoff mit einer laminierten Struktur in der Gruppe bestehend aus tonartigen Materialien, Talkum, Schichtsilikaten, Materialien, die zur Glimmergruppe gehören, Graphit und Graphen enthalten ist.

5. Mischung nach Anspruch 1, **dadurch gekennzeichnet, dass** der verstärkende Füllstoff mit einer laminierten Struktur mit einer Menge eines Behandlungsmittels im Bereich von 70 bis 100 Gewichtsteilen pro 100 Gewichtsteile Füllstoff mit laminierter Struktur vorbehandelt ist.

6. Mischung nach Anspruch 1, **dadurch gekennzeichnet, dass** der verstärkende Füllstoff mit einer laminierten Struktur mit Behandlungsmittel vorbehandelt ist, das eine Kette von Kohlenstoffatomen im Bereich von 16 bis 24 umfasst.

7. Mischung nach Anspruch 1, **dadurch gekennzeichnet, dass** die Polymerbasis mit vernetzender ungesättigter Kette eine Polymermischung umfasst, die mindestens aus dem Halogenbutylkautschuk und aus Naturkautschuk besteht.

8. Mischung nach Anspruch 1, **dadurch gekennzeichnet, dass** die Polymermischung aus 60 bis 90 phr Halogenbutylkautschuk und 10 bis 40 phr Naturkautschuk zusammengesetzt ist.

9. Reifenabschnitt, gefertigt mit einer Mischung nach einem der vorstehenden Ansprüche.

10. Reifenabschnitt nach Anspruch 9, **dadurch gekennzeichnet, dass** er ein Innenmantel ist.

11. Reifen, umfassend einen Abschnitt nach Anspruch 9.

12. Verwendung eines verstärkenden Füllstoffs mit einer laminierten Struktur, die mit einem Behandlungsmittel vorbehandelt ist, das in der Gruppe bestehend aus Fettsäuren, Harzsäure, Fettsäuresalzen und Fettsäureestern enthalten ist; wobei der verstärkende Füllstoff mit einer laminierten Struktur mit einer Menge eines Behandlungsmittels im Bereich von 50 bis 100 Gewichtsteilen pro 100 Gewichtsteile Füllstoff mit laminierter Struktur vorbehandelt ist,
in Kautschukverbindungen zur Herstellung von Reifenabschnitten, wobei die Mischungen eine Polymerbasis mit vernetzender ungesättigter Kette umfassen, die mindestens einen Halogenbutylkautschuk und ein Vulkanisierungssystem umfasst.

13. Verwendung nach Anspruch 12, **dadurch gekennzeichnet, dass** der verstärkende Füllstoff mit einer laminierten Struktur in der Gruppe bestehend aus tonartigen Materialien, Talkum, Schichtsilikaten, Materialien, die zur Glimmergruppe gehören, Graphit und Graphen enthalten ist.

14. Verwendung nach Anspruch 12, **dadurch gekennzeichnet, dass** der verstärkende Füllstoff mit einer laminierten Struktur mit einer Menge eines Behandlungsmittels im Bereich von 70 bis 100 Gewichtsteilen pro 100 Gewichtsteile Füllstoff mit laminierter Struktur vorbehandelt ist.

15. Verwendung nach Anspruch 12, **dadurch gekennzeichnet, dass** der verstärkende Füllstoff mit einer laminierten Struktur mit einem Behandlungsmittel vorbehandelt ist, das eine Kette von Kohlenstoffatomen im Bereich von 16 bis 24 umfasst.

## Revendications

1. Composé pour préparer une partie de pneumatique ; ledit composé comprenant une base polymère avec une chaîne insaturée de réticulation comprenant au moins un caoutchouc halobutyle, une charge renforçante et un système de vulcanisation ; ledit composé étant **caractérisé en ce qu'**il comprend une charge renforçante avec une structure stratifiée prétraitée avec un agent de traitement compris dans le groupe constitué d'acides gras, acide résinique, sels d'acide gras et esters d'acide gras ; ladite charge renforçante avec une structure stratifiée étant prétraitée avec une quantité d'agent de traitement allant de 50 à 100 parties en poids pour 100 parties en poids de charge avec une structure stratifiée.

2. Composé selon la revendication 1, **caractérisé en ce qu'**il comprend 2 à 70 pcc de ladite charge renforçante avec une structure stratifiée prétraitée.

3. Composé selon la revendication 1, **caractérisé en ce qu'**il comprend 2 à 20 pcc de ladite charge renforçante avec une structure stratifiée prétraitée.

4. Composé selon la revendication 1, **caractérisé en ce que** ladite charge renforçante avec une structure stratifiée est comprise dans le groupe constitué de matières argileuses, de talc, de phyllosilicates, de matières appartenant au groupe du mica, de graphite et de graphène.

5. Composé selon la revendication 1, **caractérisé en ce que** ladite charge renforçante avec une structure stratifiée est prétraitée avec une quantité d'agent de traitement allant de 70 à 100 parties en poids pour 100 parties en poids de charge avec une structure stratifiée.

6. Composé selon la revendication 1, **caractérisé en ce que** ladite charge renforçante avec une structure stratifiée est prétraitée avec un agent de traitement comprenant une chaîne d'atomes de carbone dont le nombre va de 16 à 24.

7. Composé selon la revendication 1, **caractérisé en ce que** ladite base polymère avec une chaîne insaturée de réticulation comprend un mélange de polymères constitué au moins dudit caoutchouc halobutyle et de caoutchouc naturel.

8. Composé selon la revendication 1, **caractérisé en ce que** ledit mélange de polymères est constitué de 60 à 90 pcc de caoutchouc halobutyle et de 10 à 40 pcc de caoutchouc naturel.

9. Partie de pneumatique fabriquée avec un composé selon l'une quelconque des revendications précédentes.

10. Partie de pneumatique selon la revendication 9, **caractérisée en ce qu'**il s'agit d'un revêtement interne.

11. Pneumatique comprenant une partie selon la revendication 9.

12. Utilisation d'une charge renforçante avec une structure stratifiée prétraitée avec un agent de traitement compris dans le groupe constitué d'acides gras, acide résinique, sels d'acide gras et esters d'acide gras ; ladite charge renforçante avec une structure stratifiée étant prétraitée avec une quantité d'agent de traitement allant de 50 à 100 parties en poids pour 100 parties en poids de charge avec une structure stratifiée
dans des composés de caoutchouc pour la préparation de parties de pneumatique, lesdits composés comprenant une base polymère avec une chaîne insaturée de réticulation comprenant au moins un caoutchouc halobutyle et un système de vulcanisation.

13. Utilisation selon la revendication 12, **caractérisée en ce que** ladite charge renforçante avec une structure stratifiée est comprise dans le groupe constitué de matières argileuses, de talc, de phyllosilicates, de matières appartenant au groupe du mica, de graphite et de graphène.

14. Utilisation selon la revendication 12, **caractérisée en ce que** ladite charge renforçante avec une structure stratifiée est prétraitée avec une quantité d'agent de traitement allant de 70 à 100 parties en poids pour 100 parties en poids de charge avec une structure stratifiée.

15. Utilisation selon la revendication 12, **caractérisée en ce que** ladite charge renforçante avec une structure stratifiée est prétraitée avec un agent de traitement comprenant une chaîne d'atomes de carbone dont le nombre va de 16 à 24.
